# EUROPEAN PATENT APPLICATION

(11) **EP 1 531 116 A2**
(43) Date of publication of application: **18.05.2005**
(21) Application number: 04380033.3
(22) Date of filing: 13.02.2004
(51) Int. Cl.: B62D 29/04, B60R 13/02

(54) **Method for producing a reinforcing and soundproofing panel for vehicule roofs, reinforcing member obtained from such method and use of a two component polyurethane compound for producing said reinforcing member**

(30) Priority: 14.11.2003 ES 200302657
(71) Applicant: Intier Automotive Interiors Zippex, S.A.U., 08740 St. Andreu de la Barca (Barcelona) (ES)
(72) Inventor: Corull Massana, Ernest, 08740 St. Andreu de la Barca Barcelona (ES)
(74) Representative: Morgades Manonelles, Juan Antonio

(57) **Abstract**

A first Kraft layer is provided between two polyethylene layers forming a first layer (A) on which a foam layer (C) and a second Kraft layer arranged between two polyethylene layers are provided forming a second layer (B). The three layers are moulded and the product is cut to the desired size. The central foam layer (C) is formed of polyurethane comprising a first component that is a polyol and additives mixture, and a second component that is modified methylene diisocyanate (MDI).

A rigid element (10) is thus obtained which density and thickness may be readily modified by varying the amount of foam applied in the process without modifying the product.

## Description

The present invention relates to a method for producing roof reinforcing members for motor vehicles. The invention also relates to a roof reinforcing member for motor vehicles obtained from said method and to the use of a two component polyurethane compound for producing said reinforcing member.

The present invention belongs to the automotive technical field, and more particularly it refers to the production of roof reinforcing and soundproofing members for motor vehicles.

This type of reinforcement is typically provided between the outer body work panel of the vehicle roof and the inner coating, or upholstery, of the vehicle interior (also referred to as 'imperial' in the art). The assembly is carried out from the inside of the vehicle interior attaching said reinforcing member by means of an appropriate adhesive to the inner part of the body work panel of the vehicle roof.

The main purpose of such reinforcement is acting as a shield for a better acoustic isolation and, at the same time, as a stiffening member for the vehicle structure. Said purpose seeks for an increased strength of the vehicle roof in case of accident, overturning, and so forth, and also in other suppositions where external loads applied to the vehicle roof are present and which could be detrimental to the security of the occupants. As noted before, there is also provided an acoustic isolation function for the vehicle interior from noise generated either from the movement itself thereof or from external agents (hit, rain, etc.).

Several solutions have been proposed in the state of the art to achieve said stiffening and acoustic isolation purposes. The use of metal reinforcing members and coatings attached to the roof in the form of a panel made of an acoustic insulating material has been proposed. Said solutions have not however demonstrated to be completely effective in the practice due to the physical properties of such panels which, as they are typically made of cardboard, they exhibit a poor mechanical strength and they are sensitive to the humidity.

Said reinforcing means have been subsequently improved by using multilayer flat structures. An example of said reinforcements is, for example, the one described in the European patent EP0825066. This patent refers to a method for producing a roof stiffener for vehicles which is assembled from inside the vehicle interior. The method consists in making a planar, semifinished product comprising several layers. More particularly, two Kraft outer layers and a rigid foam central layer are provided, said central layer being, for example, a polyurethane foam layer. The product is divided centrally into two portions and it is cut with oversize to the dimensions of the roof membrane. Then a single Kraft lining is cut with oversize to the dimensions of the roof membrane. Finally, a shaping step is carried out wherein cutting of the divided semifinished product and cutting of said single Kraft lining, together with an adhesive layer provided between the surface of the foam layer and the single Kraft lining, are moulded and bonded to the final shape of the roof membrane. Kraft linings are covered on both sides with thermoplastic material, whereas the single Kraft lining is covered with thermoplastic material only on the side which is not intended for bonding.

EP0832787 teaches a laminated panel as a headliner for vehicle roofs having laminated layers. The layers include polyurethane foam, agricultural fibers, a decorative material, and a backing. There is also disclosed a method of making a headliner consisting in forming sheets of agricultural fibres incorporating a protective hair; saturating said foam layer with an adhesive; placing one said sheet of agricultural fiber on each side of said foam layer; placing a decorative material and the backing on each side respectively, and squeezing together said layers for spreading the adhesive between all of them to form a laminated sheet.

The present invention provides a method for producing a roof reinforcing member for vehicles which makes it possible to produce reinforcing members having higher physical properties reducing the final cost of the product as the production method is simplified. At the same time, the invention achieves a considerable flexibility in the product processing which is notably advantageous since, as it will be seen, certain reinforcing member parameters may be modified in the same production process.

The invention also refers to a roof reinforcing member for vehicles obtained from such a method and it also refers to the use of a two component polyurethane compound for producing said reinforcing members, as it will be herein described.

The method of the invention comprises the following steps:
- feeding a first layer comprising a Kraft layer provided between two polyethylene layers;
- simultaneously feeding a second layer above and parallel thereto and comprising a Kraft layer provided between two polyethylene layers;
- applying foam on said first layer, said step being able to be carried out, for example, by spraying said foam on the surface of said first layer or alternatively by depositing said foam on the surface of said first layer, said deposition extending throughout said surface in a subsequent moulding stage of both layers;
- performing said moulding stage of said layers in a hot mould after said previous foam application step; and
- cutting the product obtained to the desired size, which may be carried out by water jet cutting.

The roof reinforcing member for vehicles obtained from said method according to the invention comprises a multilayer structure having a central foam layer provided between an outer layer adjacent to the body work panel of the vehicle roof and an inner layer of the vehicle roof.

More particularly, both the inner and the outer layers of the vehicle roof reinforcing member comprise a Kraft layer provided between two layers of polyethylene (PE). On the other hand, the central foam layer is formed of a two component polyurethane compound, one of them being a polyol and additives mixture, and the other being modified methylene diisocyanate (MDI). Additives are catalyst and/or stabilizing agents, and they are CFC free. This type of special foam that is used has a density after moulding of 60 Kg/m³ and a free density of 30 Kg/m³. It is preferred that the weight mixture ratio of the polyol-additives component to MDI is 1:1.85.

The invention also refers to the use of a two component polyurethane compound, one of them being a polyol and additives mixture, and the other being modified methylene diisocyanate (MDI), for producing roof reinforcing members for motor vehicles and the like as stated before.

It should be noted especially the fact that, with the method herein disclosed, the density of the obtained product may be readily modified by varying the amount of foam applied in the process but without modifying the product. This is possible, among other reasons, since no press moulding steps are performed in the method of the present invention as occurs in the prior art methods but two hot semi-moulds are used instead between which the formed reinforcing member is formed. The desired reinforcing member thickness for each requirement may be therefore modified with great comfort.

A further advantage of the invention is that the two end layers between which the foam layer is applied are simultaneously advanced in the producing method of the reinforcing member, so that the adhesive layer which is commonly used so far in the prior art on the paper layer is not necessary anymore.

The features and the advantages of the method for producing roof reinforcing members for vehicles as well as said reinforcing member will be clearer from the detailed description of a preferred embodiment which will be given hereinafter by way of a non limitative example and with reference to the drawings herein enclosed, in which:
Fig. 1 is a diagrammatic illustration showing the stations from which an installation is formed for carrying out the method of the invention; and
Fig. 2 is a cross sectional view of a roof reinforcing member for vehicles obtained through the method of the invention.

Here follows a list of the different reference numerals which have been used to describe the preferred embodiment of the present invention:
(1) first feeding station;
(2) feeding roller of the first feeding station;
(3) feeding roller support of the first feeding station;
(4) feeding roller of the second feeding station;
(5) feeding roller support of the second feeding station;
(6) spraying arm;
(7) moulding station;
(8, 9) semi-moulds;
(10) roof reinforcing member for vehicles;
(11) cutting station;
(12) cutting arm;
   (A) first inner layer;
   (B) second inner layer; and
   (C) foam layer.

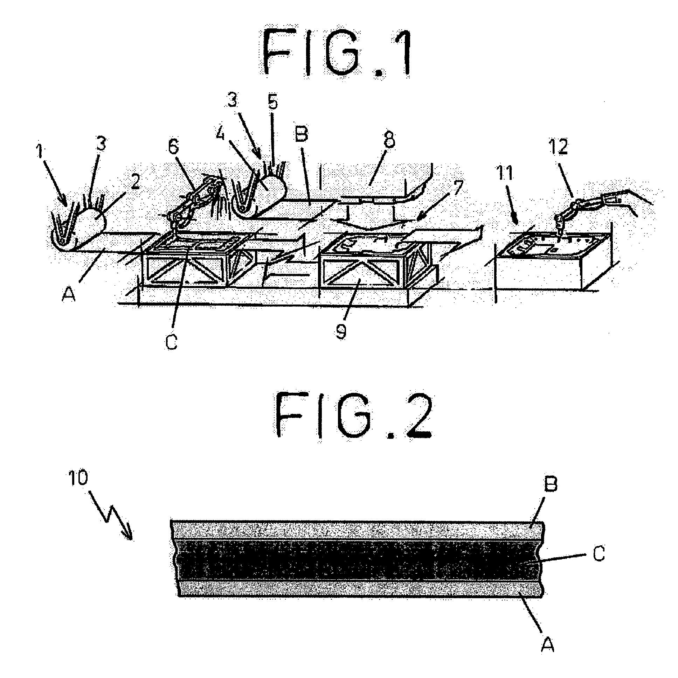

A method for producing a reinforcing member indicated at (10) in the figures which is applied in a vehicle roof is described below. Said description will be given with reference to the illustration in fig. 1 of the stations from which an installation for carrying out said method is formed.

First, feeding of a first layer (A) takes place in a first feeding station (1) through a rotary feeding roller (2) mounted on appropriate supports (3). Said first layer (A) is formed of a Kraft layer provided between two polyethylene layers.

A second layer (B) is simultaneously fed by a second feeding station (3) through a corresponding rotary feeding roller (4) mounted in respective supports (5). As it can be seen, feeding of the second layer (B) is carried out above and parallel to said layer (A) of the reinforcing member (10). This layer (B) is formed of a Kraft layer provided between two layers of polyethylene (PE).

During the feeding process of the layer (A) a foam layer (C) is applied thereto by a spraying arm (6) working inside a cabin to avoid pollution. The amount of foam applied, time of application, product transport speed along different stations, etc. is controlled through suitable control means (not shown as falling outside the scope of the invention). It should be especially noted the fact that the parameter of the advance of the product along the installation depends to a large extent on the foam formulation, taking specially into consideration the fact that the application of foam on the central layer (C) is carried out before the moulding process which will be described below. On the other hand, it should be noted that spraying of said foam (C) onto the surface of said first layer (A), deposition of foam onto the surface of said first layer (A), or any other suitable type of application according to the requirements may be carried out by the sprayer arm (6).

Shaping of layers (A, B, C) takes place after the application step of said foam (C) in a moulding station (7). Said moulding station (7) essentially comprises two hot semi-moulds (8, 9) between which the reinforcing member (10) is provided. The working temperature should be such that it allows catalyzation of the reaction of the components and it may be, for example, of the order of 80°C. Moulding time may be of the order of 70 to 110 seconds, even though it will be modified depending on the formulation of the components, specially that corresponding to the central layer (C).

Once said layers (A, B, C) have been moulded, the obtained reinforcing member (10) is passed into a cutting station (11) having an arm (12) that is provided with a water jet cutting head for cutting the obtained reinforcing member (10) to the desired size with high precision. The cutting step may also comprise the formation of holes, etc, according to the required configuration for assembly in the vehicle roof. Assembly is carried out by adhesion thereto using a suitable adhesive on the external layer (B) of the reinforcing member (10).

Said reinforcing member (10) for the vehicle roof obtained from the method which is herein described is a sandwich type multilayer structure comprising, as shown in the diagrammatic drawing in fig. 2, a central foam layer (C) provided between an external layer (B) adjacent to the body work panel of the vehicle roof and an inner layer (A) of the vehicle roof. Layers (A, B) are both formed of a Kraft layer provided between two layers of polyethylene (PE).

The central foam layer (C) is formed of a two component polyurethane compound having a free density of 30 Kg/m³ and a density after moulding of 60 Kg/m³ and preferably of closed cell. One of the components of the foam layer (C) is a polyol and additives mixture, and the other of the components is another modified methylene diisocyanate (MDI). The additives are catalyst and/or stabilizing agents, and they are CFC free. The weight mixture ratio of the component polyol-additives to MDI is of 1:1.85.

With said process, density of the reinforcing member (10) may be varied by modifying the amount of foam of the layer (C) that is applied in the process without modifying the product and without changing the tools. A reinforcing member (10) for roofs and motor vehicles is obtained having good acoustic isolation properties and high physical properties, which stiffness may be varied as required, as noted before. By way of example, a higher rigidity is obtained with a 6 mm thick reinforcing member according to the invention than with an 8 mm thick conventional reinforcing member.

With the method herein disclosed reinforcing members (10) may be obtained in the form of boards of, for example, 1600-1660 mm of width, 1510-2040 mm of length with a thickness of 6 mm and a density of 60 Kg/m³ in multiple panels (for example 2, 4 or 10). It will be understood, however, that these values are given by way of an example for a given production process and that consequently they do not involve in any case a limitation in the present invention.

Once having been sufficiently described what the present invention consists according to the enclosed drawings, it is understood that any detail modification can be introduced as appropriate, provided that variations may alter the essence of the invention as summarised in the appended claims.

## Claims

1. Method for producing a reinforcing member (10) for vehicle roofs comprising the step of feeding a first layer (A) formed of a Kraft layer provided between two polyethylene layers onto which a foam layer (C) is provided, **characterized in that** it further comprises a step of simultaneously feeding in parallel a second layer (B) formed of a Kraft layer provided between two polyethylene layers, a moulding step of said layers (A, B, C) in a moulding station (7) subsequent to the step for applying foam (C), and a final step for cutting the obtained product to the desired size.

2. Method as claimed in claim 1, **characterized in that** the step for applying foam (C) on the first layer (A) is carried out by spraying said foam onto the surface of said first layer (A).

3. Method as claimed in claim 1, **characterized in that** the step for applying foam (C) on the first layer (A) is carried out by depositing said foam (C) onto the surface of said first layer (A), said deposition extending over the whole surface in the moulding step of said layers (A, B, C).

4. Method as claimed in claim 1, **characterized in that** said cutting step of the obtained product to the desired size is carried out by water jet cutting.

5. Reinforcing member (10) for vehicle roofs obtained from the method according to any of the claims 1 to 4 comprising a multilayer structure (A, B, C) formed of a central foam layer (C) provided between an outer layer (B) adjacent to the body work panel of the vehicle roof and an inner layer (A) of the vehicle roof, **characterized in that** the inner layer (A) and the outer layer (B) of said reinforcing member (10) are both formed of a Kraft layer provided between two polyethylene layers.

6. Reinforcing member (10) for vehicle roofs according to claim 5, **characterized in that** said central foam layer (C) is formed of a polyurethane compound formed of a first component and a second component, said first component being a polyol additives mixture, and said second component being modified methylene diisocyanate (MDI).

7. Reinforcing member (10) for vehicle roofs as claimed in claim 6, **characterized in that** the weight mixture ratio of both components is 1:1.85.

8. Reinforcing member (10) for vehicle roofs as claimed in claim 6, **characterized in that** said additives are catalyst and/or stabilizing agents, and they are CFC free.

9. Reinforcing member (10) for vehicle roofs as claimed in claim 6, **characterized in that** said central foam layer (C) exhibits a density after moulding of 60 Kg/m³.

10. Use of a polyurethane compound formed of a first component and a second component, said first component being a polyol additives mixture, and said second component being modified methylene diisocyanate (MDI), for producing reinforcing members for roofs for motor vehicles and the like according to any of the claims 5 to 9.
